# EUROPEAN PATENT APPLICATION

(11) **EP 2 650 670 A1**
(43) Date of publication of application: **16.10.2013**
(21) Application number: 11847328.9
(22) Date of filing: 18.11.2011
(51) Int. Cl.: G01N 21/27, G01N 21/03

(54) **SPR SENSOR CELL AND SPR SENSOR**

(30) Priority: 10.12.2010 JP 2010275281
(71) Applicant: Nitto Denko Corporation, Osaka 567-8680 (JP)
(72) Inventor: KONTANI, Tomohiro, Ibaraki-shi Osaka 567-8680 (JP)
(74) Representative: Alt, Michael
(86) International application number: PCT/JP2011/076617
(87) International publication number: WO 2012/077482

(57) **Abstract**

An SPR sensor includes an SPR sensor cell. The SPR sensor cell includes an optical waveguide to be brought into contact with a sample. The optical waveguide includes an under clad layer, a core layer provided in the under clad layer such that at least a portion thereof is exposed from the under clad layer, a metal layer covering the core layer exposed from the under clad layer, and a cover layer to be brought into contact with a sample, the cover layer covering the metal layer. The water wettability of the cover layer is higher than water wettability of the metal layer.

## Description

### TECHNICAL FIELD

The present invention relates to an SPR sensor cell and an SPR sensor, and particularly to an SPR sensor cell including an optical waveguide and to an SPR sensor including the SPR sensor cell.

### BACKGROUND ART

Conventionally, in the fields of chemical analysis, biochemical analysis, and the like, an SPR (Surface Plasmon Resonance) sensor including an optical fiber has been used.

In the SPR sensor including the optical fiber, a metal thin film is formed on the outer peripheral surface of the tip portion of the optical fiber, while an analysis sample is fixed thereto, and light is introduced into the optical fiber. Of the introduced light, light at a specific wavelength causes surface plasmon resonance in the metal thin film to attenuate the light intensity thereof.

In such an SPR sensor, the wavelength which causes the surface plasmon resonance normally differs depending on the refractive index of the analysis sample fixed to the optical fiber.

Therefore, if the wavelength at which the light intensity attenuates after the occurrence of the surface plasmon resonance is measured, the wavelength that has caused the surface plasmon resonance can be specified. Also, if the wavelength at which the attenuation occurs has changed and is detected, it is possible to confirm that the wavelength which causes the surface plasmon resonance has changed. This allows a change in the refractive index of the analysis sample to be confirmed.

Consequently, such an SPR sensor can be used for various chemical analyses and biochemical analyses such as, e.g., measurement of the concentration of a sample and detection of an immune reaction.

For example, when the sample is a solution, the refractive index of the sample (solution) depends on the concentration of the solution. Accordingly, in the SPR sensor in which the sample (solution) is brought into contact with a metal thin film, by measuring the refractive index of the sample (solution), the concentration of the sample can be detected and, by also confirming that the refractive index thereof has changed, it can be confirmed that the concentration of the sample (solution) has changed.

In the analysis of an immune reaction, e.g., an antibody is fixed onto the metal thin film of the optical fiber in the SPR sensor via a dielectric film and a specimen is brought into contact with the antibody, while surface plasmon resonance is caused. At this time, if an immune reaction occurs between the antibody and the specimen, the refractive index of the sample changes. Therefore, by confirming that there is a change between the refractive indices of the sample before and after the contact between the antibody and the specimen, it can be determined that the immune reaction has occurred between the antibody and the specimen.

However, in an SPR sensor including such an optical fiber, the tip portion of the optical fiber has a minute cylindrical shape resulting in the problem: it is difficult to form a metal thin film and fix an analysis sample.

To solve the problem, an SPR sensor cell has been proposed which includes, e.g., a core through which light is transmitted and a clad covering the core. At a predetermined position in the clad, a through hole is formed to reach the surface of the core, and a metal thin film is formed on the surface of the core at a position corresponding to the through hole (see, e.g., Patent Document 1 shown below).

The SPR sensor cell allows easy formation of the metal thin film for causing surface plasmon resonance on the surface of the core and easy fixation of the analysis sample to the surface thereof.

### Prior Art Document

### Patent Document

Patent Document 1: Japanese Unexamined Patent No. 2000-19100

### SUMMARY OF THE INVENTION

### PROBLEMS TO BE SOLVED BY THE INVENTION

However, in the SPR sensor cell described in Patent Document 1 mentioned above, on the upper surface of the core facing the through hole of the clad, the metal thin film is formed. In such a form, there is a limit to the sensitivity of detecting the concentration of the analysis sample, a change therein, or the like.

An object of the present invention is to provide an SPR sensor cell and an SPR sensor each having an excellent detection sensitivity.

### MEANS FOR SOLVING THE PROBLEM

An SPR sensor cell of the present invention includes an optical waveguide to be brought into contact with a sample, wherein
the optical waveguide includes
an under clad layer,
a core layer provided in the under clad layer such that at least a part thereof is exposed from the under clad layer,
a metal layer covering the core layer exposed from the under clad layer, and
a cover layer to be brought into contact with a sample, the cover layer covering the metal layer; and
water wettability of the cover layer is higher than water wettability of the metal layer.

In the SPR sensor cell of the present invention, it is preferable that the cover layer is composed of metal oxide.

In the SPR sensor cell of the present invention, it is preferable that the cover layer has a contact angle with water of 80° or less.

In the SPR sensor cell of the present invention, it is preferable that the optical waveguide further includes an over clad layer formed on the under clad layer so as to surround the sample to be in contact with the cover layer.

An SPR sensor of the present invention includes the SPR sensor cell described above.

### EFFECT OF THE INVENTION

The SPR sensor cell and the SPR sensor each according to the present invention can achieve an improvement in detection sensitivity.

### BRIEF DESCRIPTION OF THE DRAWINGS

[FIG. 1]FIG. 1 is a perspective view showing an embodiment of an SPR sensor cell of the present invention;
[FIG. 2]FIG. 2 is a cross-sectional view of the SPR sensor cell shown in FIG. 1;
[FIG. 3]FIG. 3 is a process drawing illustrating a method for producing the SPR sensor cell shown in FIG. 1,
   (a) illustrating a step of forming a core layer on a substrate,
   (b) illustrating a step of forming an under clad layer on the substrate so as to cover the core layer,
   (c) illustrating a step of stripping the substrate from the core layer and the under clad layer,
   (d) illustrating a step of forming a protective layer on the surfaces of the core layer and the under clad layer each exposed by the stripping of the substrate,
   (e) illustrating a step of forming a metal thin film on the surface of the protective layer exposed from the over clad layer so as to cover the core layer,
   (f) illustrating a step of forming a cover layer on the metal thin film, and
   (g) illustrating a step of forming an over clad layer on the surface of the protective layer.

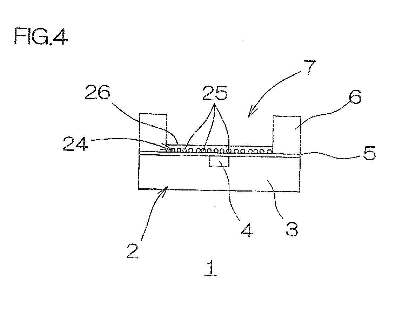

[FIG. 4]FIG. 4 is a cross-sectional view showing another embodiment of the SPR sensor cell of the present invention.

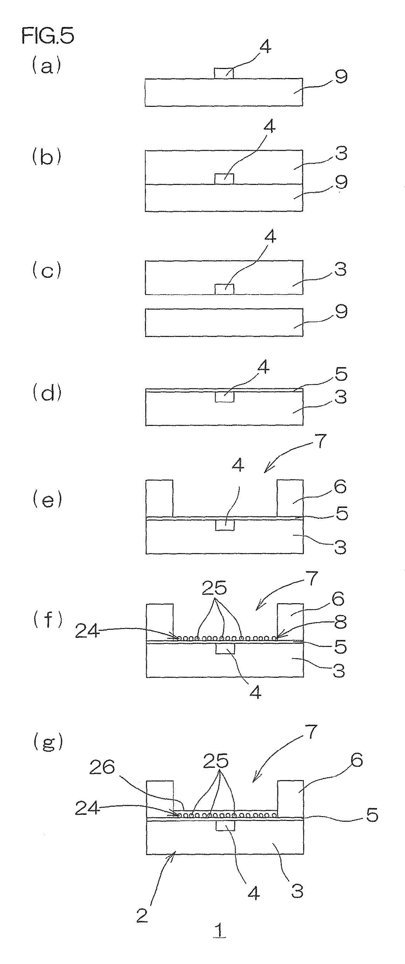

[FIG. 5]FIG. 5 is a process drawing illustrating a method for producing the SPR sensor cell shown in FIG. 4,
   (a) illustrating a step of forming a core layer on a substrate,
   (b) illustrating a step of forming an under clad layer on the substrate so as to cover the core layer,
   (c) illustrating a step of stripping the substrate from the core layer and the under clad layer,
   (d) illustrating a step of forming a protective layer on the surfaces of the core layer and the under clad layer each exposed by the stripping of the substrate,
   (e) illustrating a step of forming an over clad layer on the surface of the protective layer,
   (f) illustrating a step of forming a metal particle layer on the surface of the protective layer exposed from the over clad layer so as to cover the core layer, and
   (g) illustrating a step of forming a cover layer on the metal particle layer.

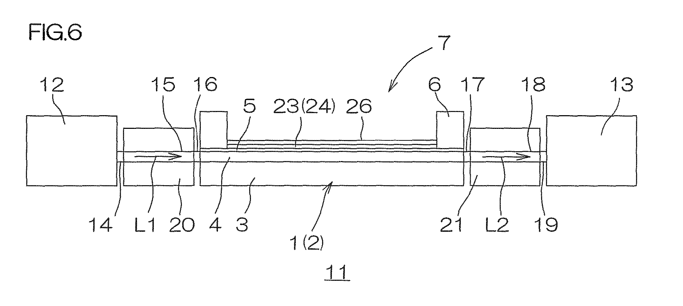

[FIG. 6]FIG. 6 is a schematic side sectional view showing an embodiment of an SPR sensor of the present invention.

### EMBODIMENT OF THE INVENTION

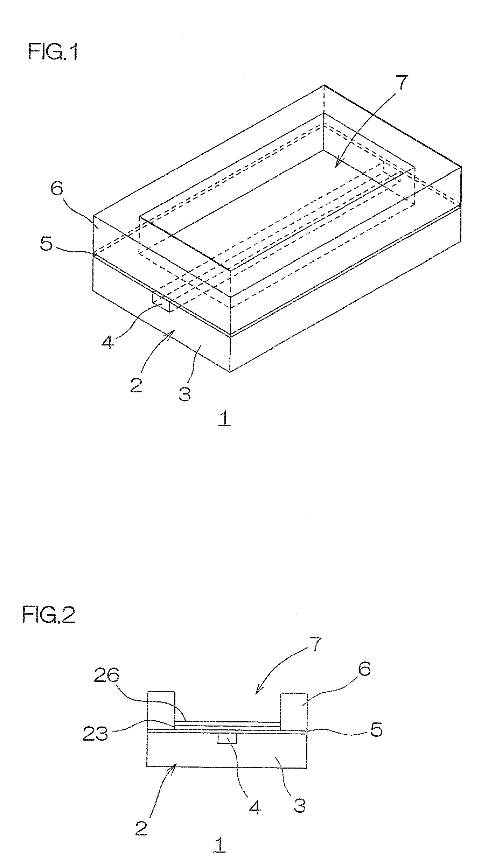

FIG. 1 is a perspective view showing an embodiment of an SPR sensor cell of the present invention. FIG. 2 is a cross-sectional view of the SPR sensor cell shown in FIG. 1.

As shown in FIGS. 1 and 2, an SPR sensor cell 1 is formed in the shape of a bottomed frame which is generally rectangular in plan view, and includes an optical waveguide 2. In the SPR sensor cell 1, a sample to be analyzed by an SPR sensor 11 (described later) is placed. In the SPR sensor cell 1, a support member (not shown) which supports the optical waveguide 2 can be provided as necessary. Note that, in the following description of the SPR sensor cell 1, when a direction is mentioned, the state where the sample is placed in the SPR sensor cell 1 is used as a reference in an up-down direction. That is, in FIG. 1, the upper side on a paper surface is defined as an upper side, and the lower side on a paper surface is defined as a lower side.

The optical waveguide 2 is, in this embodiment, the SPR sensor cell 1 itself, and includes an under clad layer 3, a core layer 4, a protective layer 5, an over clad layer 6, and a metal thin film 23 as a metal layer.

The under clad layer 3 is formed in the shape of a flat plate which is generally rectangular in plan view and has a predetermined thickness in the up-down direction.

The core layer 4 is formed in a generally rectangular columnar shape (specifically, a rectangular cross-sectional shape which flattens in a widthwise direction) extending in a direction perpendicular to each of the widthwise direction (direction perpendicular to a thickness direction, which similarly applies to the following) of the under clad layer 3 and the thickness direction thereof. The core layer 4 is embedded in the upper end portion of the widthwise generally middle portion of the under clad layer 3. Note that, in the following description of the SPR sensor cell 1, the direction in which the core layer 4 extends is defined as a propagation direction in which light propagates in the optical waveguide 2.

The core layer 4 is disposed such that both surfaces thereof in the propagation direction are flush with the both surfaces of the under clad layer 3 in the propagation direction and the upper surface thereof is flush with the upper surface of the under clad layer 3. That is, the core layer 4 has the upper surface thereof exposed from the under clad layer 3.

When the core layer 4 is embedded in the under clad layer 3 such that the upper surface thereof is flush with the upper surface of the under clad layer 3, in the formation of the metal thin film 23 and a metal particle layer 24 (described later), a metal material (described later) and metal particles 25 (described later) can be efficiently placed only on the upper side of the core layer 4.

To both end portions of the core layer 4 in the propagation direction, a light source 12 (described later) and a light measuring device 13 (described later) are optically connected.

As necessary, the protective layer 5 is formed as a thin layer having the same shape as that of the under clad layer 3 in plan view so as to cover the entire upper surfaces of the under clad layer 3 and the core layer 4.

If the protective layer 5 is formed, when the sample is, e.g., liquid, it is possible to prevent the core layer 4 from being swelled by the sample.

The over clad layer 6 is formed in a rectangular frame shape in plan view on the protective layer 5 such that the outer perimeter thereof is generally the same as the outer perimeter of the under clad layer 3 when viewed in plan view.

Accordingly, the optical waveguide 2 is formed in a bottomed frame shape having the protective layer 5 formed over the under clad layer 3 and the core layer 4 as the bottom wall thereof and having the over clad layer 6 as the sidewalls thereof. The portion surrounded by the protective layer 5 and the over clad layer 6 is defined as a sample container 7 which contains the sample therein.

As shown in FIG. 2, the metal thin film 23 is formed in the sample container 7 so as to uniformly cover the upper surface of the core layer 4 via the protective layer 5.

The metal thin film 23 is formed so as to cover at least the upper surface of the core layer 4 exposed from the over clad layer 6, and although not shown, for example, the length in the width direction of the metal thin film 23 may be the same as the length in the width direction of the core layer 4, or may be the same as the length in the width direction of the protective layer 5.

In such an optical waveguide 2, on the metal thin film 23, a cover layer 26 with which the sample is to be brought into contact is provided.

The cover layer 26 is formed as a thin layer having the same shape as that of the metal thin film 23 when viewed from the top so as to cover the entire upper surface of the metal thin film 23.

When the cover layer 26 is formed, detection sensitivity of the SPR sensor cell 1 can be improved.

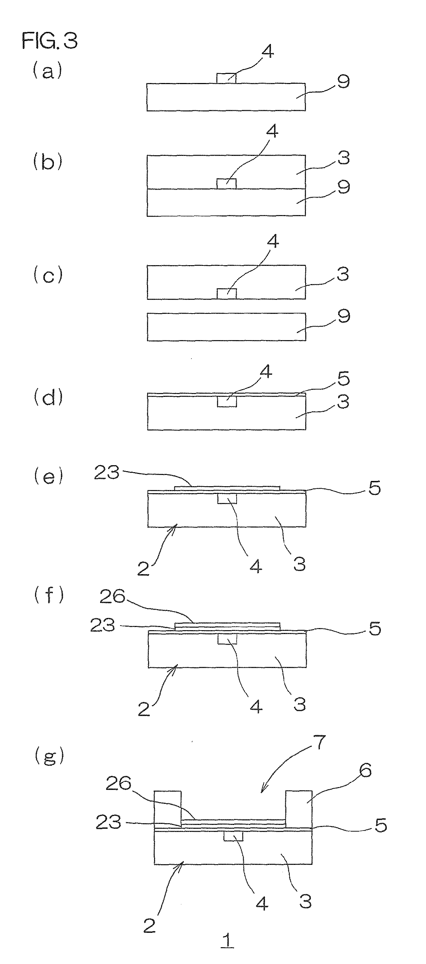

FIG. 3 is a process drawing showing a method for producing the SPR sensor cell shown in FIG. 1.

Next, a method for producing the SPR sensor cell 1 is described with reference to FIG. 3.

In the method, as shown in FIG. 3(a), a substrate 9 having a flat plate shape is prepared first. Then, on the substrate 9, the core layer 4 is formed.

The substrate 9 is formed of a ceramic material such as, e.g., silicon or glass, a metal material such as, e.g., copper, aluminum, stainless steel, or an iron alloy, a resin material such as, e.g., polyimide, glass-epoxy, or polyethylene terephthalate (PET), or the like. Preferably, the substrate 9 is formed of the ceramic material. The thickness of the substrate 9 is in a range of, e.g., 10 to 5000 µm, or preferably 10 to 1500 µm.

Examples of a material for forming the core layer 4 include resin materials such as, e.g., polyimide resin, polyamide resin, silicone resin, epoxy resin, acrylic resin, fluorine-modified products thereof, deuterium-modified products thereof, a modified product of fluorine, and the like. Preferably, such a resin material is blended with a photosensitive agent to be used as a photosensitive resin.

To form the core layer 4, a varnish (resin solution) of the resin shown above is prepared, applied in the foregoing pattern to the surface of the substrate 9, dried, and cured as necessary. When the photosensitive resin is used, a varnish thereof is applied to the entire surface of the substrate 9, dried, exposed to light via a photomask, subjected to post-exposure heating as necessary, and developed into a pattern, which is then heated.

The thickness of the core layer 4 thus formed is in a range of, e.g., 5 to 100 µm, and the width thereof is in a range of, e.g., 5 to 100 µm. The refractive index of the core layer 4 is in a range of, e.g., not less than 1.44 and not more than 1.65.

Next, in the method, as shown in FIG. 3(b), the under clad layer 3 is formed in the pattern described above on the substrate 9 so as to cover the core layer 4.

Examples of a material for forming the under clad layer 3 include a resin material which is prepared from the same resin material as shown above so as to have a refractive index adjusted to be lower than the refractive index of the core layer 4.

To form the under clad layer 3 on the substrate 9, e.g., a varnish (resin solution) of the resin shown above is prepared, applied onto the substrate 9 by, e.g., casting, a spin coater, or the like so as to cover the core layer 4, then dried, and heated as necessary. When the photosensitive resin is used, a varnish thereof is applied, dried, then exposed to light via a photomask, subjected to post-exposure heating as necessary, developed, and then heated.

The thickness of the under clad layer 3 thus formed which is measured from the surface of the core layer 4 is in a range of, e.g., 5 to 200 µm. The refractive index of the under clad layer 3 is set lower than the refractive index of the core layer 4 to be in a range of, e.g., not less than 1.42 and less than 1.55.

Thus, the under clad layer 3 and the core layer 4 are formed flush at the lower surfaces thereof in contact with the substrate 9.

Next, in the method, as shown in FIG. 3(c), the substrate 9 is stripped from the under clad layer 3 and the core layer 4, and the under clad layer 3 and the core layer 4 are turned upside down.

As a result, the surfaces of the under clad layer 3 and the core layer 4 that have been in contact with the substrate 9 are exposed as the upper surfaces.

Next, in the method, as shown in FIG. 3(d), the protective layer 5 is formed on the under clad layer 3 and the core layer 4.

Examples of a material of forming the protective layer 5 include silicon dioxide, aluminum oxide, and the like. Preferably, a material which is obtained from such a material so as to have a refractive index adjusted to be lower than the refractive index of the core layer 4 is used.

Examples of a method for forming the protective layer 5 include a sputtering method, a vapor deposition method, and the like. Preferably, the sputtering method is used.

The thickness of the protective layer 5 thus formed is in a range of, e.g., 1 to 100 nm, or preferably 5 to 20 nm. The refractive index of the protective layer 5 is set lower than the refractive index of the core layer 4 to be in a range of, e.g., not less than 1.25 and less than 1.55.

The surface of the protective layer 5 can be treated in advance with a known primer such as a silane coupling agent. When the surface of the protective layer 5 is treated with the above-described primer in advance, when the metal thin film 23 and the metal particle layer 24 (described later) are formed, the metal material (described later) and the metal particles 25 (described later) can be strongly fixed to the protective layer 5.

As the silane coupling agent, an amino-group-containing silane coupling agent such as γ-aminopropyl triethoxy silane can be used.

When the treatment is performed using the silane coupling agent as the primer, e.g., an alcohol solution of the silane coupling agent is applied to the protective layer 5 and then subjected to heat treatment.

Next, in this method, as shown in FIG. 3 (e), the metal thin film 23 is formed on the protective layer 5 so as to cover the core layer 4 via the protective layer 5.

Examples of the metal material that forms the metal thin film 23 include gold, silver, platinum, copper, aluminum, and alloys thereof.

These metal materials may be used singly or in a combination of two or more.

To form the metal thin film 23, for example, as necessary, first, a resist having a pattern reverse to the pattern of the metal thin film 23 is formed, and the surrounding of the portion of the metal thin film 23 to be formed is masked. Thereafter, the metal thin film 23 is formed, for example, by vapor deposition such as vacuum deposition, ion plating, and sputtering, on the upper surface of the core layer 4 (on the core layer 4 exposed from the resist formed as necessary). Thereafter, when the resist is formed, the resist is removed by etching or stropping.

A plurality of metal thin films 23 are laminated as necessary.

The thickness of the metal thin film 23 thus formed (when a plurality of the metal thin films 23 are formed, the total thickness) is, for example, 40 to 70 nm, preferably 50 to 60 nm.

Next, in this method, as shown in FIG. 3 (f), the cover layer 26 is formed on the metal thin film 23 into the above-described pattern.

To form the cover layer 26, for example, a material of metal oxides such as silicon dioxide, aluminum oxide, and titanium oxide are used.

The cover layer 26 can be formed by a method such as sputtering, and vapor deposition, and preferably, sputtering is used.

The cover layer 26 thus formed has a thickness of, for example, 1 to 10 nm, preferably 1 to 5 nm.

The cover layer 26 is formed so that water wettability of the cover layer 26 is higher than water wettability of the metal thin film 23. The wettability is evaluated by measuring a contact angle with water by sessile-drop method in conformity with JIS R3257.

In the SPR sensor cell 1, a sample is brought into contact with the cover layer 26 having higher water wettability than water wettability of the metal thin film 23. Therefore, compared with the case where the sample is brought into contact with the metal thin film 23, higher affinity between the sample and the portion to be contacted (cover layer 26) can be achieved, and detection accuracy can be improved.

To be more specific, in the optical waveguide 2, the contact angle of the cover layer 26 with water is smaller than the contact angle (usually 95 to 100°) of the above-described metal thin film 23, preferably 80°or less, and usually 20° or more.

When the contact angle of the cover layer 26 with water is the above-described upper limit or less, the sample can be conformed well on the portion to be contacted (cover layer 26), and detection accuracy can be improved.

Next, in the method, as shown in FIG. 3(g), the over clad layer 6 is formed in the pattern described above on the protective layer 5.

For the materials that form the over clad layer 6, for example, silicone rubber, or resin materials given as examples for the above-described under clad layer 3 are used.

To form the over clad layer 6, e.g., a sheet having a rectangular frame shape in plan view is formed from the material shown above in advance and then laminated as the over clad layer 6 on the protective layer 5.

To form the over clad layer 6, e.g., it is also possible that a varnish (resin solution) of the resin shown above is prepared, applied in the pattern described above to the surface of the protective layer 5, dried, and then cured as necessary. When a photosensitive resin is used, it is also possible that a varnish is applied to the entire surface of the protective layer 5, dried, then exposed to light via a photomask, subjected to post-exposure heating as necessary, then developed into a pattern, and subsequently heated.

The thickness of the over clad layer 6 thus formed is in a range of, e.g., 5 to 200 µm, or preferably 25 to 100 µm. The refractive index of the over clad layer 6 is set lower than the refractive index of the core layer 4. For example, the refractive index of the over clad layer 6 is set similarly to, e.g., the refractive index of the under clad layer 3. Note that, when the refractive index of the protective layer 5 is lower than the refractive index of the core layer 4, the refractive index of the over clad layer 6 need not necessarily be lower than the refractive index of the core layer 4.

In such an over clad layer 6, the size and shape of the sample container 7 are not particularly limited, and are determined appropriately in accordance with the type and use purpose of the sample. When the SPR sensor cell 1 is to be reduced in size, the sample container 7 is preferably formed small.

The SPR sensor cell 1 can be produced in this manner. In the SPR sensor cell 1, a sample is stored (disposed) in the sample container 7 surrounded by the over clad layer 6 so that the sample is brought into contact with the cover layer 26 formed on the metal thin film 23.

According to the SPR sensor cell 1, the concentration of the sample, a change therein, or the like can be accurately detected.

Furthermore, the over clad layer 6 is formed so as to surround the sample to be in contact with the metal thin film 23, and therefore the sample can be easily disposed on the surface of the metal thin film 23, thus improvement in workability can be achieved.

FIG. 4 is a cross-sectional view showing another embodiment of the SPR sensor cell of the present invention, and FIG. 5 is a process drawing illustrating a method for producing the SPR sensor cell shown in FIG. 4. The members corresponding to the above-described members are given the same reference numerals in the following Figures, and detailed descriptions thereof are omitted.

Although the metal thin film 23 is provided as the metal layer in the description above, for example, instead of the metal thin film 23, a metal particle layer 24 can be provided as the metal layer.

In the above-described embodiment, the metal layer (metal thin film 23 or metal particle layer 24) and the cover layer 26 are laminated, and then the over clad layer 6 is laminated; however, the order of the lamination is not limited, and for example, the metal layer (metal thin film 23 or metal particle layer 24) and the cover layer 26 can be laminated sequentially after the over clad layer 6 is formed.

In the following, description is given with reference to FIG. 4 and FIG. 5 of a method in which the over clad layer 6 is formed and then the metal particle layer 24 as the metal layer and the cover layer 26 are laminated, and of an SPR sensor cell 1 obtained by the method.

In the SPR sensor cell 1, the metal particle layer 24 is formed, as shown in FIG. 4, in the sample container 7 so as to cover the protective layer 5 uniformly. That is, the metal particle layer 24 is formed so that the upper surface of the core layer 4 is covered uniformly.

In this method, first, as shown in FIG. 5 (a), in the same manner as described above, a substrate 9 having a flat plate shape is prepared, and then on the substrate 9, in the same manner as described above, the core layer 4 is formed.

Next, in this method, as shown in FIG. 5 (b), in the same manner as described above, the under clad layer 3 is formed on the substrate 9 into the above-described pattern so as to cover the core layer 4.

Next, in this method, as shown in FIG. 5 (c), in the same manner as described above, the substrate 9 is stripped from the under clad layer 3 and the core layer 4, and the under clad layer 3 and the core layer 4 are turned upside down.

Next, in this method, as shown in FIG. 5 (d), in the same manner as described above, the protective layer 5 is formed on the under clad layer 3 and the core layer 4.

Next, in the method, as shown in FIG. 5(e), the over clad layer 6 is formed in the pattern described above on the protective layer 5.

Next, in the method, as shown in FIG. 5(f), the metal particle layer 24 is formed in the sample container 7 so as to cover the core layer 4.

Examples of the metal particles 25 that form the metal particle layer 24 include particles composed of metals such as gold, silver, copper, aluminum, chromium, and platinum; inorganic particles such as silica, and carbon black with the surface thereof covered with the above-described metals; and organic particles such as resin with its surface covered with the above-described metals. Preferably, particles composed of metal, and more preferably, chromium particles, or gold particles are used.

The average particle size of the metal particles 25 is calculated as, e.g., an average value of any 100 particles observed by electron microscopic observation, and is in a range of, e.g., 5 to 300 nm, or preferably 10 to 150 nm.

To form the metal particle layer 24, to be specific, although not shown, for example, the above-described metal particles 25 are dispersed in a known solvent to prepare a dispersion liquid of particles, and the dispersion liquid of particles is applied on the protective layer 5 and dried.

Note that a gold-particle-dispersed liquid in which gold particles are dispersed as the metal particles 25 is commercially available. For example, EMGC Series (available from British BioCell International Ltd.) or the like can be used.

In the metal particle layer 24 thus formed, the individual metal particles 25 are preferably not stacked on each other in the thickness direction, but are formed as a single particle layer. The individual metal particles 25 are disposed in slightly spaced-apart and mutually independent relation so as not to come in contact with each other.

The metal particle layer 24 covers, when viewed from the top, the surface area of the core layer 4 exposed from the under clad layer 3, that is, covers for example, 15 to 60%, preferably 20 to 50% of the area of the sample container 7. When the metal particle layer 24 covers the core layer 4 exposed from the under clad layer 3 with the above-described percentage (coverage), the metal particle layer 24 is formed as a single particle layer where almost all the metal particles 25 are disposed independently, and therefore the sample concentration or change can be detected more accurately.

Next, in this method, as shown in FIG. 5 (g), the cover layer 26 is formed on the metal particle layer 24 in the above-described pattern.

In such a case as well, in the same case as when the metal thin film 23 is formed as the metal layer, the cover layer 26 is formed such that water wettability of the cover layer 26 is higher than water wettability of the metal particle layer 24.

To be more specific, in the optical waveguide 2, the contact angle of the cover layer 26 with water is smaller than the contact angle (usually 95 to 100°) of the above-described metal particle layer 24, preferably 80°or less, usually 20° or more.

The SPR sensor cell 1 can be produced in this manner. In the SPR sensor cell 1, a sample is contained (disposed) in the sample container 7 surrounded by the over clad layer 6, and in this manner, the sample is brought into contact with the cover layer 26 formed on the metal particle layer 24.

According to the SPR sensor cell 1, the concentration of the sample, a change therein, or the like can be accurately detected.

FIG. 6 is a schematic side cross-sectional view showing an embodiment of the SPR sensor of the present invention.

Next, the SPR sensor 11 including the SPR sensor cell 1 is described with reference to FIG. 6.

As shown in FIG. 6, the SPR sensor 11 includes a light source 12, a light measuring device 13, and the SPR sensor cell 1 described above.

The light source 12 is a known light source such as, e.g., a white light source or a monochromatic light source, which is connected to a light-source-side optical fiber 15 via a light-source-side optical connector 14. The light-source-side optical fiber 15 is connected to one end portion of the SPR sensor cell 1 (core layer 4) in the propagation direction via a light-source-side optical fiber block 16.

To the other end portion of the SPR sensor cell 1 (core layer 4) in the propagation direction, a measuring-device-side optical fiber 18 is connected via a measuring-device-side optical fiber block 17. The measuring-device-side optical fiber 18 is connected to the light measuring device 13 via a measuring-device-side optical connector 19.

The light measuring device 13 is connected to a known arithmetic processor (not shown) to allow data to be displayed, stored, and processed.

In such an SPR sensor 11, the SPR sensor cell 1 is fixed by a known sensor cell fixing device (not shown).
The sensor cell fixing device (not shown) is configured to be movable along a predetermined direction (i.e., the widthwise direction of the SPR sensor cell 1), so that the SPR sensor cell 1 is disposed at any position.

The light-source-side optical fiber 15 is fixed to a light-source-side optical fiber fixing device 20. The measuring-device-side optical fiber 18 is fixed to a measuring-device-side optical fiber fixing device 21.

The light-source-side optical fiber fixing device 20 and the measuring-device-side optical fiber fixing device 21 are fixed onto a known 6-axis movable stage (not shown), and are configured to be movable in the propagation direction of the optical fibers, the widthwise direction (direction horizontally perpendicular to the propagation direction) thereof, the thickness direction (direction vertically perpendicular to the propagation direction) thereof, and directions (three directions) of rotation around the respective directions (three directions).

According to such an SPR sensor 11, the light source 12, the light-source-side optical fiber 15, the SPR sensor cell 1 (core layer 4), the measuring-device-side optical fiber 18, and the light measuring device 13 can be arranged on one axis, and light can be introduced from the light source 12 so as to pass therethrough.

In the SPR sensor 11, the SPR sensor cell 1 described above is used to allow the concentration of the sample, a change therein, or the like to be accurately detected.

A description is given below to an application of the SPR sensor 11.

In the application, e.g., the sample is contained (placed) first in the sample container 7 of the SPR sensor cell 1 shown in FIG. 6 to be brought into contact with the cover layer 26. Then, from the light source 12, predetermined light is introduced into the SPR sensor cell 1 (core layer 4) via the light-source-side optical fiber 15 (see the arrow L1 shown in FIG. 6).

The light introduced into the SPR sensor cell 1 (core layer 4) passes through the SPR sensor cell 1 (core layer 4), while repeating total internal reflection in the core layer 4, and a part of the light incident on the metal thin film 23 (or metal particle layer 24) on the upper surface of the core layer 4 via the protective layer 5 is attenuated by surface plasmon resonance.

Thereafter, the light transmitted through the SPR sensor cell 1 (core layer 4) is introduced into the light measuring device 13 via the measuring-device-side optical fiber 18 (see the arrow L 2 shown in FIG. 6).

That is, in the SPR sensor 11, of the light introduced into the light measuring device 13, the light intensity at a wavelength which has caused the surface plasmon resonance in the core layer 4 is attenuated.

Since the wavelength which causes the surface plasmon resonance depends on, for example, the refractive index of the sample contained (placed) in the SPR sensor cell 1 and brought into contact with the cover layer 26, by detecting the attenuation of the light intensity of the light introduced into the light measuring device 13, a change in the refractive index of the sample can be detected.

More specifically, when, e.g., a white light source is used as the light source 12, the wavelength at which the light intensity is attenuated after the light transmission through the SPR sensor cell 1 (wavelength which causes the surface plasmon resonance) is measured by the light measuring device 13 and, if the wavelength at which the attenuation occurs has changed and is detected, it is possible to confirm the change in the refractive index of the sample.

Alternatively, when, e.g., a monochromatic light source is used as the light source 12, a change in (the degree of attenuation of) the light intensity of monochromatic light after being transmitted through the SPR sensor cell 1 is measured by the light measuring device 13 and, if the degree of attenuation has changed and is detected, in the same manner as described above, it is possible to confirm that the wavelength which causes the surface plasmon resonance has changed and confirm the change in the refractive index of the sample.

Accordingly, such an SPR sensor 11 can be used for various chemical analyses and biochemical analyses such as, e.g., measurement of the concentration of a sample and detection of an immune reaction based on a change in the refractive index of the sample.

More specifically, when, e.g., the sample is a solution, the refractive index of the sample (solution) depends on the concentration of the solution. Accordingly, if the refractive index of the sample (solution) is detected in the SPR sensor 11 in which the sample (solution) has been brought into contact with the cover layer 26, the concentration of the sample can be measured. In addition, if the refractive index of the sample (solution) has changed and is detected, it is possible to confirm that the concentration of the sample (solution) has changed.

In the detection of an immune reaction, e.g., an antibody is fixed onto the cover layer 26 of the SPR sensor cell 1 via a dielectric film and a specimen is brought into contact with the antibody. At this time, if an immune reaction occurs between the antibody and the specimen, the refractive index of the sample changes. Therefore, by detecting a change existing between the refractive indices of the sample before and after the contact between the antibody and the specimen, it can be determined that the immune reaction has occurred between the antibody and the specimen.

According to such an SPR sensor cell 1 and an SPR sensor 11, with a simple configuration, an improvement in detection sensitivity can be achieved.

Note that, in the embodiment described above, one core layer 4 is formed in the SPR sensor cell 1, but the number of the core layers 4 is not particularly limited. It is also possible to form a plurality of the core layers 4 in widthwise mutually spaced-apart relation.

When the optical waveguide 2 includes the plurality of core layers 4, by the SPR sensor 11 including the SPR sensor cell 1, samples can be simultaneously analyzed a plurality of times. As a result, the efficiency of analysis can be improved.

In the embodiment described above, the core layer 4 is formed in a generally rectangular columnar shape, but the shape of the core layer 4 is not particularly limited. The core layer 4 can be formed into any shape such as, e.g., a generally semicircular shape (semicircular columnar shape) in cross section or a generally convex shape (convex columnar shape) in cross section.

In the embodiment described above, the upper end portion of the SPR sensor cell 1 is open, but the upper end portion of the SPR sensor cell 1 can also be provided with a lid covering the sample container 7. This can prevent the sample from coming into contact with outside air during measurement.

It is also possible to provide the lid covering the sample container 7 with an inlet for injection of the sample (liquid) into the sample container 7 and an outlet for ejection of the sample from the sample container 7, inject the sample from the inlet, allow the sample to pass through the inside of the sample container 7, and eject the sample from the outlet. This allows the physical properties of the sample to be sequentially measured, while allowing the sample to flow in the sample container 7.

### EXAMPLES

While in the following, the present invention will be described more specifically with reference to Examples and Comparative Examples, the present invention is not limited thereto.

### Example 1

On a silicon substrate (substrate), using a photosensitive epoxy resin, a core layer having a generally rectangular columnar shape having a thickness of 50 µm and a width of 50 µm was formed (see FIG. 3(a)).

Next, on the silicon substrate, an under clad layer was formed using a photosensitive epoxy resin having a refractive index lower than that of the photosensitive epoxy resin used to form the core layer so as to cover the core layer and have a thickness of 100 µm which is measured from the upper surface of the core layer (see FIG. 3(b)).

Next, from the under clad layer and the core layer, the silicon substrate was stripped (see FIG. 3(c)), and the under clad layer and the core layer were turned upside down.

Then, on the under clad layer and the core layer, a silicon dioxide thin film having a thickness of 10 nm was formed as a protective layer by a sputtering method (see FIG. 3(d)).

Then, by sputtering, a gold thin film having a thickness of 50 nm and a width of 1 mm was formed on the protective layer to overlap with the position of the core layer (ref: FIG. 3 (e)). The contact angle of the gold thin film with water was measured by sessile-drop method in conformity with JISR3257, and it was found that the contact angle was 97.7°.

Then, by sputtering, a silicon dioxide thin film having a thickness of 5 nm and a width of 1 mm was formed as a cover layer on the gold thin film (ref: FIG. 3 (f)). The contact angle of the cover layer with water was measured by sessile-drop method in conformity with JIS R3257, and it was found that the contact angle was 74.3°.

Then, a silicon rubber sheet formed with an opening having a length of 1 mm in a widthwise direction and a length of 6 mm in a propagation direction was separately prepared and laminated as an over clad layer on the protective layer (see FIG. 3(g)). Thus, a sample container having a length of 1 mm in the widthwise direction and a length of 6 mm in the propagation direction was defined.

An SPR sensor cell was obtained in this manner.

### Example 2

An SPR sensor cell was obtained in the same manner as in Example 1, except that an aluminum oxide thin film having a thickness of 10 nm and a width of 1 mm as a cover layer was formed instead of the silicon dioxide thin film. The contact angle of the cover layer with water was measured by sessile-drop method in conformity with JIS R3257, and it was found that the contact angle was 78.2°.

### Example 3

On a silicon substrate (substrate), using a photosensitive epoxy resin, a core layer having a generally rectangular columnar shape having a thickness of 50 µm and a width of 50 µm was formed (see FIG. 5(a)).

Next, on the silicon substrate, an under clad layer was formed using a photosensitive epoxy resin having a refractive index lower than that of the photosensitive epoxy resin used to form the core layer so as to cover the core layer and have a thickness of 100 µm which is measured from the upper surface of the core layer (see FIG. 5(b)).

Next, from the under clad layer and the core layer, the silicon substrate was stripped (see FIG. 5(c)), and the under clad layer and the core layer were turned upside down.

Then, on the under clad layer and the core layer, a silicon dioxide thin film having a thickness of 10 nm was formed as a protective layer by a sputtering method (see FIG. 5(d)).

Subsequently, a 3 mass% ethanol solution of γ-aminopropyl triethoxy silane (silane coupling agent) was applied onto the protective layer and then subjected to heat treatment at 100°C for 2 hours.

Then, a silicon rubber sheet formed with an opening having a length of 1 mm in a widthwise direction and a length of 6 mm in a propagation direction was separately prepared and laminated as an over clad layer on the protective layer (see FIG. 5(e)). Thus, a sample container having a length of 1 mm in the widthwise direction and a length of 6 mm in the propagation direction was defined.

Then, the gold-particle-dispersed liquid (EMGC Series available from British BioCell International Ltd.) shown in the following Table was applied to the protective layer in the sample container, and dried. Subsequently, to remove gold particles unattached to the protective layer, the protective layer in the sample container was washed with ethanol, so that a metal particle layer was formed on the protective layer (see FIG. 5(f)). The contact angle of the metal thin film with water was measured by sessile-drop method in conformity with JISR3257, and it was found that the contact angle was 97.9°.

Then, by sputtering, a silicon dioxide thin film having a thickness of 5 nm and a width of 1 mm was formed as a cover layer on the metal particle layer (ref: FIG. 5 (g)). The contact angle of the cover layer with water was measured by sessile-drop method in conformity with JISR3257, and it was found that the contact angle was 74.3°.

An SPR sensor cell was obtained in this manner.

### Comparative Example 1

An SPR sensor cell was obtained in the same manner as in Example 1, except that the cover layer was not formed.

### Comparative Example 2

An SPR sensor cell was obtained in the same manner as in Example 3, except that the cover layer was not formed.

### Evaluation

Each of the SPR sensor cells obtained by Examples and Comparative Examples was fixed to an SPR sensor (see FIG. 6).

Thereafter, 50 µL of an aqueous ethylene glycol solution (five different concentrations: 1 mass%(refractive index: 1.33389), 5 mass%(refractive index: 1.33764), 10 mass%(refractive index: 1.34245), 20 mass%(refractive index: 1.35231), and 30 mass%(refractive index: 1.36249)) was introduced as a sample into the sample container of the SPR sensor cell, and light at a wavelength of 565 nm was applied from one end of the core layer. The intensity of light exited from the other end was measured.

Then, transmittance (%) was determined, setting the intensity of light in the absence of the aqueous ethylene glycol solution to 100%.

Then, onto X-Y coordinates where the X-axis represents the refractive indices of the ethylene glycol solutions and the Y-axis represents the transmittances thereof, the relationships therebetween were plotted to produce analytical curves, and the gradients thereof was determined. The values thereof are shown in Table 1. Note that a larger gradient (the absolute value) shows a higher detection sensitivity.

**[Table 1]**

| Examples and Comparative Examples No. | Metal Layer | Cover Layer | Gradient |
|---|---|---|---|
| Example 1 | Metal thin film | Silicon dioxide | -100.12 |
| Example 2 | Metal thin film | Aluminum oxide | -183.35 |
| Example 3 | Metal particle layer | Silicon dioxide | -221.73 |
| Comparative Example 1 | Metal thin film | - | -67.40 |
| Comparative Example 2 | Metal particle layer | - | -193.05 |

### Result

In each of Examples in which the cover layers were formed, the gradient was larger than those in Comparative Examples in which the cover layers were not formed.

While the illustrative embodiments of the present invention are provided in the above description, such is for illustrative purpose only and it is not to be construed limitative. Modification and variation of the present invention which will be obvious to those skilled in the art is to be covered by the following claims.

### Industrial Applicability

An SPR sensor of the present invention including an SPR sensor cell of the present invention can be used for various chemical analyses and biochemical analyses.

## Claims

1. An SPR sensor cell comprising:
an optical waveguide to be brought into contact with a sample,
wherein the optical waveguide comprises
an under clad layer,
a core layer provided in the under clad layer such that at least a part thereof is exposed from the under clad layer,
a metal layer covering the core layer exposed from the under clad layer, and
a cover layer to be brought into contact with a sample, the cover layer covering the metal layer,
wherein water wettability of the cover layer is higher than water wettability of the metal layer.

2. The SPR sensor cell according to Claim 1, wherein the cover layer comprises metal oxide.

3. The SPR sensor cell according to Claim 1, wherein the cover layer has a contact angle with water of 80° or less.

4. The SPR sensor cell according to Claim 1, wherein the optical waveguide further comprises an over clad layer formed on the under clad layer so as to surround the sample to be in contact with the cover layer.

5. An SPR sensor comprising :
an SPR sensor cell comprises an optical waveguide to be brought into contact with a sample,
wherein the optical waveguide comprises
an under clad layer,
a core layer provided in the under clad layer such that at least a portion thereof is exposed from the under clad layer,
a metal layer covering the core layer exposed from the under clad layer, and
a cover layer to be brought into contact with a sample, the cover layer covering the metal layer,
wherein the water wettability of the cover layer is higher than water wettability of the metal layer.
